# EUROPÄISCHE PATENTSCHRIFT

(11) **EP 2 396 575 B1**
(45) Veröffentlichungstag und Bekanntmachung des Hinweises auf die Patenterteilung: **14.08.2013**
(21) Anmeldenummer: 09748033.9
(22) Anmeldetag: 27.10.2009
(51) Int. Cl.: F16J 15/08, F02F 11/00

(54) **FLACHDICHTUNGEN MIT ZUSÄTZLICHEM ABDICHTELEMENT**
GASKETS HAVING ADDITIONAL SEALING ELEMENT
JOINTS D'ÉTANCHÉITÉ PLATS AVEC ÉLÉMENT D'ÉTANCHÉITÉ SUPPLÉMENTAIRE

(30) Priorität: 13.02.2009 DE 102009008791
(43) Veröffentlichungstag der Anmeldung: 21.12.2011
(73) Patentinhaber: Federal-Mogul Sealing Systems GmbH, 57562 Herdorf (DE)
(72) Erfinder: KLINNER, Manfred, 53844 Troisdorf (DE)
(74) Vertreter: Becker Kurig Straus
(86) Internationale Anmeldenummer: PCT/EP2009/007677
(87) Internationale Veröffentlichungsnummer: WO 2010/091705

(56) Entgegenhaltungen:
- DE-A1-102004 012 905
- DE-A1-102005 007 245
- DE-T2- 69 806 120
- DE-U1- 20 021 017
- US-A- 4 856 796
- US-A- 5 979 906

## Beschreibung

Die vorliegende Erfindung betrifft eine Flachdichtung, insbesondere für Brennkraftmaschinen wie zum Beispiel eine Zylinderkopfdichtung, eine Dichtung im Bereich der Abgaszuführung bzw. Abgasabführung von Turboladern oder eine Dichtung im Bereich der Abgasrückführung.

Flachdichtungen wie zum Beispiele Zylinderkopfdichtungen dichten Brennräume, Medium-Durchführungen wie Kühl-, Schmiermittel- und Abgasdurchführungen sowie Schraublöcher ab. Sie sind Kraftvermittler zwischen den zu dichtenden Bauteilen, zum Beispiel Motorblock und Zylinderkopf, und weisen dadurch einen erheblichen Einfluss auf die Kraftverteilung im Gesamtsystem auf. So müssen Zylinderkopfdichtungen beispielsweise gasdicht abschließen und gleichzeitig Motoröl- und Kühlwasserkanäle sicher gegen Flüssigkeitsaustritt abdichten. Eine herkömmliche Flachdichtung ist z.B. aus DE 200 21 017 U bekannt.

Klassische Weichstoff-Flachdichtungen können zum Beispiel aus einem gespleißten Trägerblech bestehen, auf das beidseitig Weichstoffmaterial ausgebracht zum Beispiel durch Walzen ist. Metallische Einfassungen können vorgesehen sein, die Brennräume, Medium-Durchführungen und Schraublöcher abzudichten und schützen das Weichstoffmaterial vor Überhitzung. Eine Imprägnierung der Weichstoffmaterialoberfläche kann ein Quellen durch Kontakt mit den Medien wie zum Beispiel Öl, Wasser, Frostschutzmittel oder andere Flüssigkeiten bzw. Gase verhindern. Sogenannte Viton-Elemente bevorzugt aus Elastomerwerkstoffen können vorgesehen sein, um eine partielle Erhöhung der Flächenpressung in vorbestimmten Bereichen wie z.B. Öldruckbohrungen zu ermöglichen. Durch die Flächenpressung wird der Werkstoff so verformt, dass er sich an die abzudichtenden Flächen anpasst. Für die Abdichtung sind vergleichsweise hohe Einspannkräfte bei niedrigen Rückfedereigenschaften erforderlich.

Werden hohe Anforderungen an die Dichtwirkung von Flachdichtungen gestellt, wie zum Beispiel hohe Drücke, unter dem das anzudichtende Gas bzw. Medium steht, oder hohe Temperaturen, können sogenannte Mehr-Lagen- bzw. Mehr-Lagen-Stahl-Dichtungen (MLS-Dichtungen) eingesetzt werden. Solche Mehr-Lagen-Stahl-Dichtungen bestehen aus zwei oder mehreren Dichtfunktionslagen aus zum Beispiel Feder- oder Kohlenstoffstahlblechen, die zu einer Mehr-Lagen-Stahl-Flachdichtung aufgeschichtet sind. Zur sicheren Gas- und Medienabdichtung erhöhen Sicken an den abzudichtenden Räumen bzw. Durchführungen/Durchtritten die lokale Pressung (Makroabdichtung), vollflächig oder partielle Elastomerbeschichtungen können die Dichtwirkung (Mikroabdichtung) zusätzlich verbessern.

Die vorliegende Erfindung stellt eine verbesserte, hinsichtlich ihrer Dichtfunktion anwendungsbezogen anpassbare Flachdichtung bereit.

Die Aufgabe der vorliegenden Erfindung wird durch eine bezüglich der Dichtfunktion der Flachdichtung vorgeschalteten Sicke, insbesondere mindestens eine Halb- oder Vollsicke, gelöst.

Erfindungsgemäß wird eine Flachdichtung mit einer oder mehreren Stopperfunktionslagen gemäß Anspruch 1 bereitgestellt, die insbesondere zur Verwendung mit Verbrennungsmotoren als Zylinderkopfdichtung, im Bereich der Abgaszuführung oder Abgasabführung von Turboladern oder im Bereich der Abgasrückführungen vorgesehen ist. Die Flachdichtung weist bezüglich ihrer Abdichtfunktion hinsichtlich mindestens eines Stoppers der einen oder mehreren Stopperfunktionslagen eine oder mehrere vorgeschaltete Sicken auf. Bevorzugt sind Deck- und Bodenfunktionslage symmetrische ausgebildet.

Erfindungsgemäß weist die Flachdichtung bezüglich ihrer Dichtfunktion hinsichtlich des Stoppers eine oder mehrere nachgeschaltete Sicken auf.

Gemäß einer Ausführungsform ist die Flachdichtung eine mehrlagige Flachdichtung. Bevorzugt ist die Flachdichtung eine Mehr-Lagen-Stahl-Flachdichtung (MLS-Flachdichtung).

Gemäß einer Ausführungsform dichtet mindestens eine der vorgeschalteten Sicken (50, 55) gegenüber mindestens einem Einlegebauteil (80), das in mindestens einer Dichtoberfläche eines zumindest zweiteiligen zu dichtenden Bauteils (60, 65) vorgesehen ist, ab und die Abdichtfunktion der vorgeschalteten Sicke (50, 55) wird durch Vepressen der vorgeschalteten Sicke (50, 55) mit einer Oberfläche des Einlegebauteil (80) erhalten.

Gemäß einer Ausführungsform weist das Einlegebauteil (80) einen variablen oder konstanten Überstand oder Unterstand oder eine Kombination davon bezüglich der respektiven Dichtoberfläche eines Bauteils des zweiteiligen Bauteils (60, 65) auf.

Gemäß einer Ausführungsform sind die Sicken Vollsicken und/oder Halbsicken.

Gemäß einer Ausführungsform weist mindestens eines der Bauteile des zweiteiligen Bauteils einen Kanal auf, der in einem Bereich der Dichtoberfläche des respektiven Bauteiles endet, Der Bereich in dem der Kanal endet korrespondiert mit einem Bereich bezüglich der Flachdichtung zwischen dem Dichtbereich der vorgeschalteten Sicke und dem Dichtbereich des Stoppers.

Weitere Vorteile und Merkmale der vorliegenden Erfindung werden aus der folgenden Beschreibung von Ausführungsformen der Erfindung ersichtlich, in der auf die angefügten Zeichnungen Bezug genommen wird, in denen
- Fig. 1a und 1d bis 1f: erfindungsgemäße Ausführungsformen einer Flachdichtung im Querschnitt darstellt;
- Fig. 1b und 1c: nicht erfindungsgemäße Ausführungsformen darstellen;
- Fig. 2: eine bevorzugte erfindungsgemäße Ausführungsform einer Flachdichtung in Aufsicht darstellt; und
- Fig. 3a und 3b: Querschnitte durch ein zweiteiliges Bauteil mit einer Flachdichtung gemäß einer erfindungsgemäßen Ausführungsform.

Gleiche oder ähnliche Bezugszeichen bezeichnen gleiche oder ähnliche Elemente.

Nachfolgend wird die Erfindung mit Bezugnahme auf Zylinderkopfdichtungen, insbesondere Mehr-Lagen-Stahl-Zylinderkopfdichtung (MLS-Zylinderkopfdichtung) dargelegt. Dem Fachmann wird zweifelsohne erkennen, dass die Lehre der Erfindung nicht auf das Gebiet der Mehr-Lagen-Stahl-Zylinderkopfdichtung für Brennkraftmaschinen eingeschränkt anwendbar ist. Vielmehr lässt sich die Lehre der Erfindung auf weitere Flachdichtungen, die insbesondere auf dem Gebiet der Brennkraftmaschinen Verwendung finden, wie zum Beispiel Dichtungen in der Abgaszuführung bzw. Abgasabführung von Turboladern oder im Bereich der Abgasrückführung anwenden. Weiterhin wird der Fachmann ebenso unmittelbar verstehen, dass die Lehre der Erfindung nicht auf Mehr-Lagen-Stahl-Flachdichtungen (MLS-Flachdichtungen) beschränkt ist sondern ebenso Anwendung auf dem Gebiet der mehrlagigen Flachdichtungen finden kann. MLS-Flachdichtungen bzw. MLS-Zylinderkopfdichtungen sind hierbei als jeweilige Spezialfälle von mehrlagigen Flachdichtungen anzusehen.

Zylinderkopfdichtungen sind Flachdichtungen, die unter technologisch anspruchsvollen Bedingungen, Brennräume, Kühl- und Schmiermitteldurchführungen sowie Befestigungsdurchführungen (insbesondere Schraubendurchführungen) gegeneinander andichten. Die Zylinderkopfdichtung ist hierbei Kraftvermittler zwischen dem Zylinderkopf und dem Motorblock und weist dadurch einen erheblichen Einfluss auf die Kraftverteilung im Gesamtsystem Motor. Je nach Anforderungen, die durch die Betriebsbedingungen des zu dichtenden Motors definiert werden, bestehen Zylinderkopfdichten mit einer oder mehreren Lagen, insbesondere Stahllagen. Gegenwärtig werden bis zu fünf Lagen verwendet, dies ist jedoch nicht als Einschränkung zu verstehen. Der Grundaufbau einer mehrlagigen Flachdichtung, wie eine Zylinderkopfdichtung, umfasst eine Deck- und Bodenlage als Funktionslagen.

Zumindest eine dieser Funktionslagen, bevorzugt beide, ist gesickt, bevorzugt sind die Deck- bzw. Bodenfunktionslagen kongruent gesickt, und bestehen vorzugsweise aus Stahl wie zum Beispiel Federstahl oder federharten Edelstählen. Die Sicken werden durch zum Beispiel Prägen eingebracht. Um Dichtwirkung der Sicken sicherzustellen, muss die Deck- und Bodenfunktionslage im Bereich der Sicke eine für die vorgesehene Anwendung geeignete Federeigenschaft und Zugfestigkeit aufweisen. Definierte Sicken erzeugen durch die federelastischen Eigenschaften der Deck- und Bodenfunktionslage Linienpressungen im Bereich der Dichtoberflächen der zu dichtenden Bauteile, um zum Beispiel Brennräume oder Mediendurchtritte wie Abgas-, Kühl- oder Schmiermitteldurchtritte abzudichten. Durch die elastische Eigenschaft der Deck- bzw. Bodenfunktionslage, die bevorzugt aus Federstahlblech hergestellt sind, bilden sich bei einer Vollsicke vier Einzellinien mit hoher Linienpressung gegenüber den Dichtoberflächen der zu dichtenden Bauteile aus, während bei einer Halbsicke aufgrund der Eigenschaft der Deck- bzw. Bodenfunktionslage zwei Einzellinien mit hoher Linienpressung ausgebildet werden. Vollsicken können beispielsweise dynamische Dichtspaltbewegungen ausgleichen und kommen zum Beispiel bei Zylinderkopfdichtungen zur Abdichtung von Brennräumen zur Verwendung. Halbsicken erzeugen geringere Linienpressungen als Vollsicken und werden bei Zylinderkopfdichtungen bevorzugt zur Abdichtung gegen Gas und Medien wie zum Beispiel Kühlwasser und Öl und der Schraubenlöcher verwendet und dichten umlaufend die äußere Dichtungskontur. Durch die geringere Linienpressung der Halbsicken einer Zylinderkopfdichtung bleibt die Hauptpressung der Vollsicken an den Brennräumen im Wesentlichen erhalten.

Eine Vollsicke kann typischerweise durch eine Sickentiefe Y, einen Schenkelwinkel X und eine Kopfbreite V charakterisiert werden. Eine Halbsicke kann typischerweise durch eine Sickentiefe Y und einen Schenkelwinkel X charakterisiert werden. Neben der Geometrie habe Qualität, Dicke und Herstellungsprozess wesentlichen Einfluss auf die Eigenschaften der Sicken. Durch diese Faktoren lassen sich eine Vielzahl unterschiedlicher Sicken mit definierten Belastungs- und Rückfederungseigenschaften herstellen, die sich in ihrer Charakteristik bzw. Kraftaufnahme deutlich unterscheiden. So können weichere oder härtere Sicken realisiert werden. Zum Beispiel sind Vollsicken mit kleinem Schenkelwinkel X sind weicher und haben eine flachere Federkennlinie und eine höhere Dauerstandfestigkeit.

Neben Sicken, die eine Linienpressungen im Bereich der Dichtoberflächen der zu dichtenden Bauteile ausbilden, können ferner sogenannte Stopper vorgesehen sein, durch die eine erhöhte Flächenpressung im Bereich der Dichtoberflächen der zu dichtenden Bauteile erzielt werden kann. Insbesondere bei MLS-Zylinderkopfdichtungen sind Stopper im Bereich des Brennraums vorgesehen. Die sogenannten Stopper sind bevorzugt als aktive Funktionslage einer mehrlagigen Flachdichtung, die beispielsweise zwischen der Deck- und Bodenfunktionslage angeordnet ist, vorgesehen, um durch eine Überhöhung die Flächenpressung der Flachdichtung mit den Dichtoberflächen der zu dichtenden Bauteile zu erhöhen und ein Flachdrücken der Sicken zu verhindern, da beim Flachdrücken die Gefahr besteht, dass die Deck- und/oder Bodenfunktionslage im Bereich der Sicke die erforderliche Federeigenschaft bzw. Zugfestigkeit verlieren können, oder es zu einer Verringerung des zu dichtenden Querschnitts kommen kann. Beim Einbau einer Flachdichtung mit Stopper-Funktionsschicht wie zum Beispiel einer MLS-Zylinderkopfdichtung werden Sicken bis auf Stopper-Höhe oder bis zum Gleichgewicht der Sickenkraftaufnahme und Einspannkräften der Flachdichtung (z.B. den Schraubenkräften) verpresst. Das heißt, dass ein Stopper im Wesentlichen die Einbauhöhe der Sicken (Vollsicken) vorgibt und die Funktion des Stoppers hierbei die Begrenzung der Sickenverformung ist, indem der Grad der Verpressung der Sicken bestimmt wird Eine typische Höhe ausgeführter Stopper reicht von einigen 1/100 mm bis etwa 0,15 mm.

Stopper-Konstruktionen können als α-Stopper, Ω-Stopper, symmetrische U-Sicke mit einer harten Beschichtung, Wellen- oder Trapez-Stopper in eine aktive Funktionslage integriert bzw. als zusätzliche Funktionslage zwischen den aktiven Funktionslagen ergänzt werden. Ferner können in einer mehrlagigen Flachdichtung auch mehrere derartige StopperFunktionslagen vorgesehen sein. Gleichzeitig ist durch Stopper-Konstruktionen eine bessere topografische Anpassung an die angrenzenden Bauteile möglich. Ferner können Stopper wie folgt unterscheiden werden:
- starrer Stopper (z.B. gefalztes bzw. gebördeltes Stopperfunktionslage, auf/eingeschweißter bzw. -gelöteter Stopperfunktionslage wie zum Beispiel ein Stopperring etc.);
- plastischer Stopper (Anpassung des Höhenprofils der Flachdichtung);
- höhenprofilierter oder topographischer Stopper (angepasstes Höhenprofil bei der Herstellung), z.B. aufgesinterter Stopper, gezielte Reduzierung des Trägers in Bereichen hoher Bauteilsteifigkeit etc.; und
- besondere Stopper-Geometrie. z.B. Wellenstopper, Breitstopper.

Für MLS-Flachdichtungen kann ein Stopper aus verschiedenen Stahlqualitäten von beispielsweise Kohlenstoffstahl bis zu Edelstahl ausgewählt werden

In mehrlagigen Flachdichtungen, wie MLS-Flachdichtungen, können weitere Funktionslagen vorsehen, so zum Beispiel eine oder mehrere weitere gesickte Funktionslagen, Distanzfunktionslagen und/oder Elastomerfunktionslagen.

Über ein Distanzfunktionslagen, die als Konstruktionselement und variables Element zur Anpassung der Einbaudicke dienen, kann durch entsprechende Gestaltung eine elastisch/plastische Anpassung an die zu Druckverhältnisse in dem zu dichtenden Raum bzw. Durchtritt erzielt werden.

Elastomerfunktionslagen können bevorzugt als ein- oder beidseitige Elastomerbeschichtung auf aktiven Funktionslagen, insbesondere der Deck- und Bodenfunktionslagen, aufgebracht werden und stellen die sogenannte Mikro-Abdichtung d. h. die Abdichtung gegen die Oberflächenrauheit der Dichtoberflächen der zu dichtenden Bauteile bzw. zwischen den Funktionslagen einer mehrlagigen Flachdichtung sicher. Die sogenannte Makro-Abdichtung übernehmen die in Funktionslagen eingeprägten Sicken bzw. der/die mittels Stopperfunktionslagen bereitgestellten Stopper. Durch kontrollierten Anpressdruck füllt und gleicht eine derartige Bcschichtung vorhandene Rauigkeiten, Kratzer und Porositäten aus. Die Beschichtung der Oberflächen verfügt über entsprechende Gleiteigenschaften, um sogenannten "Fretting"-Marken durch Mikrobewegungen unter hoher Flächenpressung vorzubeugen. Die Funktionslagen können ganzflächig oder auch nur partiell, einlagig oder mehrlagig beschichtet sein bzw. eine oder mehrere spezielle Beschichtungen zum Beispiel in vorbestimmten Bereichen haben, die zum Beispiel auf die extremen Anforderungen (hohe Temperaturen, große Gleitbewegungen) abgestimmt ist. Durch Beschichtungen kann ein definiertes Fließverhalten vorgegeben werden. Als Elastomerbeschichtung kann zum Beispiel ein (hochtemperaturbeständiges) Fluor-Polymer dienen.

Die Funktionsweise einer mehrlagigen Flachdichtung mit Stopper-Funktionslage lässt sich in geeigneter Weise am Beispiel einer MLS-Zylinderkopfdichtung mit Stopper darstellen. Die Allgemeingültigkeit und Übertragbarkeit auf mehrlagige Flachdichtungen dieser Darstellung ist unmittelbar zu erkennen.

Die konventionelle MLS-Zylinderkopfdichtung entspricht der Bauart "Sicke neben Stopper, d. h. vom Brennraumrand aus betrachtet liegt die Sicke hinter dem Stopper. Sie befindet sich damit im "Kraft-Nebenschluss". Die zur Brennraumabdichtung notwendige Sicke kann jedoch nicht nur neben, sondern auf dem Stopper, einer umlaufenden Stopperbrille, liegen. Dies ist z.B. bei der "Bead-on-Stopper-Technologie" der Fall. Die Sicke liegt dann im "Kraft-Hauptschluss". Vorteilhaft ist die Nutzung der eingeleiteten Schraubenkräfte primär für die Gasabdichtung. Es kann auch eine zusätzliche zweite Dichtlinie durch eine nachgeschaltete, umlaufende Brennraumhalbsicke dargestellt werden. Der Stopper gibt bei diesem Konstruktionsprinzip allerdings nicht mehr die Einbauhöhe der Brennraumsicke vor.

Der Stopper einer MLS-Zylinderkopfdichtung ist die erste Abdichtstufe gegen Verbrennungsgase im Brennraum. Durch die Vorspannung der Flachdichtung zwischen den Dichtoberflächen der zu dichtenden Bauteile kommen die Sicken bei niedrigen bis mittleren Innenraumdrücken nicht zum Einsatz. Die Abdichtung erfolgt ausschließlich dadurch, dass die Dichtoberflächen der zu dichtenden Bauteile über den Bereich des Stoppers vorgespannt sind. Wenn der Stopper dann bei steigendem Innenraumdruck den Kontakt verliert, übernehmen die bezüglich des Stoppers nachgeschalteten Sicken die Dichtfunktion.

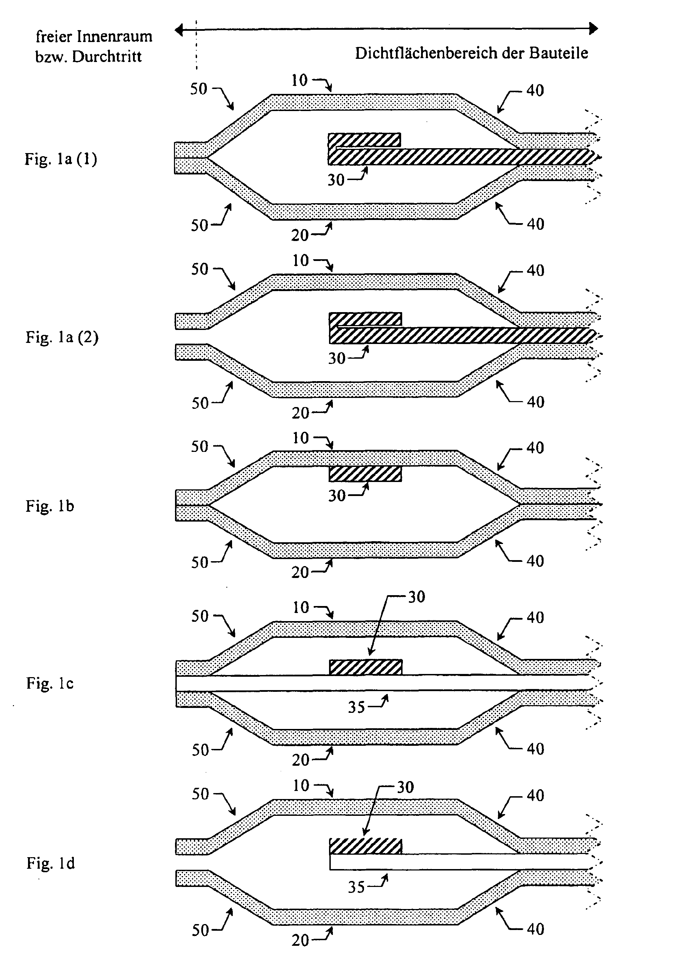

In Fig. 1a, 1d bis 1f sind erfindungsgemäße Ausführungsformen einer Flachdichtung im Querschnitt schematisch darstellt. Zwischen den Deck- und Bodenfunktionslagen 10 und 20 ist jeweils ein Stopper 30 bzw. eine Stopper-Funktionslage eingebracht. Entsprechend der Bauart "Sicke neben Stopper" ist eine Sicke 40 bzw. 45 dem Stopper 30 bezüglich der Dichtfunktion gegenüber einem Innenraum bzw. Durchtritt, der von zwei gegeneinander zu dichtenden Bauteilen umfasst ist, nachgeschaltet bzw. nachgeordnet.

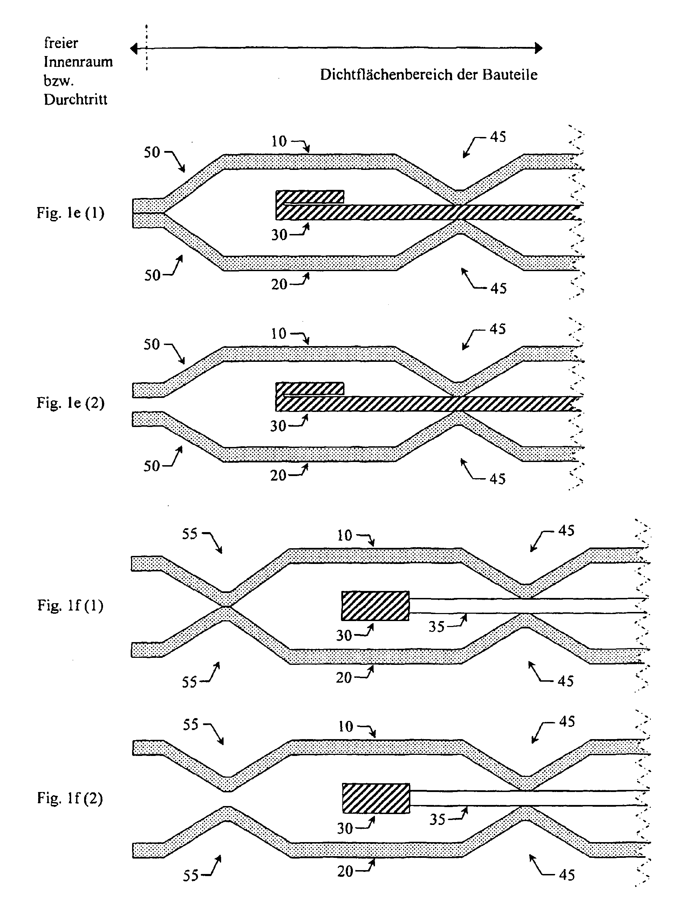

In den Fig. 1a und 1d ist jeweils eine nachgeschaltete Halbsicke 40 beispielhaft illustriert, während in den Fig. 1e und 1f jeweils eine nachgeschaltete Vollsicke 45 gezeigt wird.

Ferner zeigen die Fig. 1a, 1d bis 1f jeweils vorgeschaltete Sicken 50 bzw. 55 gemäß Ausführungsformen der vorliegenden Erfindung, wobei in Fig. 1a eine Halbsicke 50 als vorgeschaltete Sicke illustriert ist und in Fig. 1f eine vorgeschaltete Vollsicke 55 illustriert ist.

Weiterhin sind in den Fig. 1a bis 1f unterschiedliche Stopper schematisch dargestellt. In den Fig. 1a und 1e sind beispielsweise gefalzte bzw. gebördelte Stopperfunktionslagen 30 dargestellt, in der nicht erfindungsgemäßen Fig. 1b ein auf der Deckfunktionslage 10 (alternativ auf der Bodenfunktionslage 20, nicht gezeigt) angebrachter Stopper 30, in der nicht erfindungsgemäßen Fig. 1c eine zwischen der Deck- bzw. Bodenfunktionslage eingefügte zusätzliche Funktionslage 35, die im Wesentlichen bündig mit der Deck- bzw. Bodenfunktionslage 10, 20 bezüglich des Innerraums bzw. der Durchtritts abschließt und auf der ein Stopper 30 aufgebracht ist und in der erfindungsgemäßen Fig. 1f eine zwischen der Deck- bzw. Bodenfunktionslage eingefügte zusätzliche Funktionslage 35 mit einem durch beispielsweise Auf-/Anschweißen bzw. -Löten auf/angebrachten Stopper 30 wie zum Beispiel ein Stopperring 30.

Es wird verstanden, dass die in den Figuren schematisch dargestellten Stopperfunktionslagen und die in den Figuren schematisch dargestellten Deck- und Bodenfunktionslage beliebig kombiniert werden können. Ferner können wie vorstehend dargelegt mehrere Stopperfunktionslagen sowie eine oder mehrere weitere Funktionslagen wie zum Beispiele Distanzfunktionslagen, Beschichtungsfunktionslagen (in den Figuren nicht gezeigt) aber auch weitere Funktionslagen mit einer oder mehreren Sicken vorgesehen sein, wobei weitere Funktionslagen auch ober- und/oder unterhalb der Deck- bzw. Bodenfunktionslage, d.h. nicht nur zwischen diesen, angeordnet sein können. Weiterhin können auch mehrere Sicken (Voll- und/oder Halbsicken) vor- und/oder nachgeschaltet vorgesehen sein. Die Deck- und Bodenfunktionslagen 10, 20 können wie schematisch illustriert im Wesentlichen (spiegel-) symmetrisch/kongruent ausgebildet sein, jedoch können die Deck- und Bodenfunktionslagen 10, 20 auch ein oder mehrere verschiedene Sickentypen, eine oder mehrere verschiedene Positionen der Sicken, und/oder eine unterschiedliche Anzahl von Sicken aufweisen.

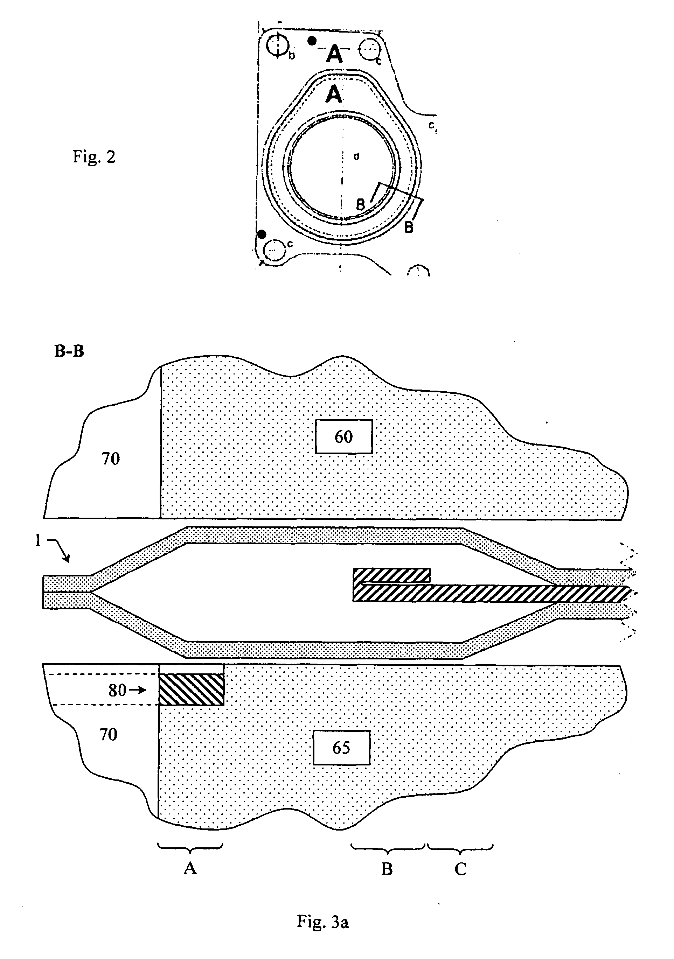

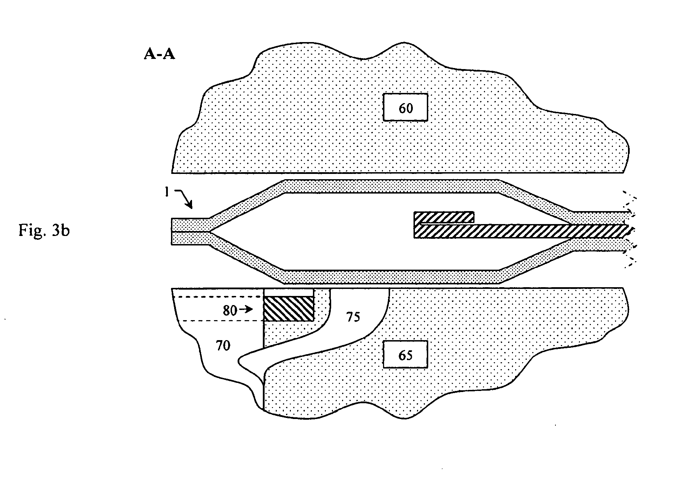

Fig. 2 zeigt eine schematische Aufsichtsansicht einer Flachdichtung gemäß einer Ausführungsform der vorliegenden Erfindung. Fig. 3a und 3b zeigen Schnitte durch die in Fig. 2 dargestellte erfindungsgemäße Flachdichtung entsprechend den in der Fig. 2 bezeichneten Schnitten.

Fig. 3a und 3b zeigen ein zweiteiliges Bauteil mit Deckelbauteil 60 und Bodenbauteil 65 (wie zum Beispiel entsprechend ein Motorblock 65 und ein Zylinderkopf 60) mit einer Flachdichtung 1 gemäß einer Ausführungsform, die zwischen den zu dichtenden Bauteilen 60 und 65 angeordnet ist. Durch Verpressen der Flachdichtung 1 wird ein Abdichten einer Öffnung 70, eines Innerraums, eines Durchtritts etc. gegenüber den Dichtoberflächen der zu dichtenden Bauteile 60 und 65 realisiert. Das Verpressen kann zum Beispiel mittels Schrauben oder anderen funktionsgleichen bzw. funktionsähnlichen Mittel erreicht werden.

Eine Gasöffnung 70 illustriert die zu dichtende Öffnung, den zu dichtenden Innenraum bzw. Durchtritt. Ein Austritt von Gasen bzw. Medien in der Öffnung, dem Innenraum bzw. dem Durchtritt durch einen Zwischenraum, der durch Deckel- und Bodenbauteile 60 und 65 gebildet wird, wird durch die in dem Zwischenraum angeordnete und verpresste Flachdichtung 1 zumindest im Wesentlichen verhindert. Ferner kann in einem der Bauteile 60, 65 zusätzlich eine Öffnung wie zum Beispiel eine Gasstromöffnung 65 vorgesehen sein.

Weiterhin ist in den Fig. 3a und 3b eine Einlegebauteil 80 vorgesehen. Das Einlegebauteil 80 kann zum Beispiel ein Einlegering sein, kann alternativ auch andere die Öffnung, den Innenraum bzw. den Durchtritt umfassende Form aufweisen. D.h. das Einlegebauteil 80 kann alternativ zum Beispiel ellipsenförmig sein, aber im Wesentlichen eine beliebige die Öffnung, den Innenraum bzw. den Durchtritt umfassende Form aufweisen.

Das Einlegebauteil 80 kann einen Überstand oder Unterstand bezüglich der respektiven Dichtoberfläche aufweisen oder im Wesentlichen mit der respektiven Dichtoberfläche fluchten. Der Überstand bzw. Unterstand des Einlegebauteils 80 kann umfänglich variable sein, d.h. das Einlegebauteil 80 kann bereichsweise einen Unterstand, bereichsweise einen Überstand und bereichsweise fluchtend, oder eine beliebige Kombination davon ausgelegt sein. Das Einlegebauteil kann einen umfangsbezüglichen variablen Querschnitt aufweisen. Das Einlegebauteil 80 kann ein einem der Bauteile 60 und 65 oder in beiden Bauteilen 60 und 65 vorgesehen sein. Das Einlegebauteil 80 kann aus dem gleichen Material wie die Bauteile 60 und 65 gefertigt sein oder aus einem anderen, bevorzugt einem Metall wie zum Beispiel einem Federstahl.

Die vorgeschalteten Sicken 50, 55 können Eigenschaften aufweisen, die von den der nachgeschalteten Sicken 40, 45 verschieden sind. So können zum Beispiel die vorgeschalteten Sicken 50, 55 bzw. die mit dem Einlegebauteil 80 Kontakt eingehende Sicke 50, 55 weichere Sickenkennlinien aufweisen. Zusammen mit der Möglichkeit, dass das das Einlegebauteil 80 einen Unterstand/Überstand bezüglich der respektiven Dichtoberfläche aufweisen kann, wird ermöglich die Verpressung der vorgeschalteten Sicke(n) und damit deren Dichtwirkung(en) spezifisch an ein gewünschtes Anforderungsprofil anzupassen.

Der Stopper der erfindungsgemäßen Flachdichtung 1 ist nun nicht mehr die erste Abdichtstufe gegen Medien/Gase in der zu dichtenden Öffnung, dem Innenraum bzw. dem Durchtritt. Vielmehr realisieren nun die vorgeschalteten Sicken 50, 55 die erste Abdichtstufe A. Die druckabhängige Abdichtfunktion der vorgeschalteten Sicken 50, 55 kann mittels des Einlegebauteils 80 bzw. dessen Unterstand/Überstand bezüglich der respektiven Dichtoberfläche eingestellt werden. Nachfolgend kommt als nun zweite Abdichtstufe B die durch den Stopper bewirkte Flächenpressung zur Wirkung. Wenn der Stopper dann bei steigendem Innenraumdruck den Kontakt verliert, übernehmen die bezüglich des Stoppers nachgeschalteten Sicken die Dichtfunktion als dritte Abdichtstufe C. Durch die Vorspannung der Flachdichtung zwischen den Dichtoberflächen der zu dichtenden Bauteile kommen die nachgeschalteten Sicken z.B. bei niedrigen bis mittleren Innenraumdrücken nicht zum Einsatz.

Wie in Fig. 3b schematisch illustriert, kann durch die erfindungsgemäßen Flachdichtung 1 zum Beispiel ein "Bypass" realisiert werden. Die Gasstromöffnung 75 bildet in der illustrierten Ausführungsform einen Kanal ausgehend von der Öffnung 70, dem Innenraum bzw. dem Durchtritt. Der Kanal der Gasstromöffnung 75 endet in einem Bereich der respektiven Dichtoberfläche des Bauteils 65, in dem die erfindungsgemäße Flachdichtung 1 angeordnet ist. Bevorzugt endet der Kanal der Gasstromöffnung 75 in einem Bereich der respektiven Dichtoberfläche des Bauteils 65, der bei angeordneter erfindungsgemäße Flachdichtung 1 einem (Linien-) Dichtbereich der vorgeschalteter Sicken 50, 55 und dem (Flächen-) Dichtbereich des Stoppers 35. Mittels des einstellbaren Überstands/Unterstands des Einlegebauteils 80 kann nun die Verpressstärke von der respektiven, vorgeschalteten Sicke 50 und Einlegebauteil 80 eingestellt werden, d.h. die Abdichtstärke/Abdichtfunktion durch die ersten Sicken bezüglich des respektiven Bauteils 60, 65 mit Einlegebauteil 80 kann eingestellt werden. Dementsprechend verliert die vorgeschaltete Sicke bei einem vorbestimmten Druck ihre Dichtfunktion und Gas kann durch den Kanal 75 der Gasstromöffnung strömen.

## Patentansprüche

1. Flachdichtung (1) mit mindestens einer gesickten Lage (10, 20) und einer oder mehreren Stopperfunktionslagen (30, 35), wobei die Flachdichtung (1) um eine Dichtöffnung herum mindestens einen umlaufenden Stopper (30) in der Stopperfunktionslage aufweist, und wobei auf einer in Richtung der Dichtöffnung gelegenen Seite des Stoppers in mindestens einer gesickten Lage mindestens eine bezüglich der Abdichtfunktion vorgeschaltete erste umlaufende Sicke (50, 55) angeordnet ist, und auf der von der Dichtöffnung abgewandten Seite des Stoppers mindestens eine nachgeschaltete zweite umlaufende Sicke (40, 45) angeordnet ist, **dadurch gekennzeichnet, dass** die Stopperfunktionslage in Richtung der Dichtöffnung vor der ersten Sicke endet.

2. Flachdichtung gemäß Anspruch 1, wobei die Flachdichtung (1) eine mehrlagige Flachdichtung ist, bevorzugt eine Mehr-Lagen-Stahl-Flachdichtung ist.

3. Flachdichtung gemäß einem der vorstehenden Ansprüche mit einem zumindest zweiteiligen zu dichtenden Bauteil (60, 65), wobei mindestens eine der vorgeschalteten Sicken (50, 55) gegenüber mindestens einem Einlegebauteil (80), das in mindestens einer Dichtoberfläche des zumindest zweiteiligen zu dichtenden Bauteils (60, 65) vorgesehen ist, abdichtet und die Abdichtfunktion der vorgeschalteten Sicke (50, 55) durch Vepressen der vorgeschalteten Sicke (50, 55) mit einer Oberfläche des Einlegebauteil (80) erhalten wird.

4. Flachdichtung gemäß Anspruch 2 mit einem zumindest zweiteiligen zu dichtenden Bauteil (60, 65), wobei ein Einlegebauteil (80) einen variablen oder konstanten Überstand oder Unterstand oder eine Kombination davon bezüglich der respektiven Dichtoberfläche eines Bauteils des zweiteiligen Bauteils (60, 65) aufweist.

5. Flachdichtung gemäß einem der vorstehenden Ansprüche, wobei die vorgeschalteten Sicken Vollsicken sind.

6. Flachdichtung gemäß einem der Ansprüche 1 bis 4, wobei die vorgeschalteten Sicken Halbsicken sind.

7. Flachdichtung gemäß einem der vorstehenden Ansprüche mit einem zumindest zweiteiligen zu dichtenden Bauteil (60, 65), wobei mindestens eines der Bauteile eines zweiteiligen Bauteils (60, 65) einen Kanal (75) aufweist, der in einem Bereich der Dichtoberfläche des respektiven Bauteiles endet, wobei der Bereich, in dem der Kanal endet, mit einem Bereich bezüglich der Flachdichtung (1) zwischen dem Dichtbereich der vorgeschalteten Sicke (50, 55) und dem Dichtbereich des Stoppers (30) korrespondiert.

## Claims

1. A flat gasket (1) with at least one beaded layer (10, 20) and one or more stopper function layers (30, 35), wherein the flat gasket (1) includes at least one peripheral stopper (30) in the stopper function layer around an opening therein to be sealed, and wherein at least one first peripheral bead (50, 55) is arranged upstream relative to the sealing function in at least one beaded layer on a side of the stopper that lies in the direction of the opening to be sealed, wherein at least one second peripheral bead (40, 45) is arranged downstream on the side of the stopper that faces away from the opening to be sealed, **characterized in that** the stopper function layer ends before the first bead in the direction of the opening to be sealed.

2. The flat gasket according to claim 1, wherein the flat gasket (1) is a flat multilayer gasket, preferably a multilayer steel gasket.

3. The flat gasket according to any previous claim with a component to be sealed having at least two parts, wherein the at least one of the upstream peripheral beads (50, 55) seals relative to at least one insert component provided in at least one sealing surface of the at least two-part component (60,65) to be sealed, and wherein the sealing function of the at least one upstream bead (50,55) is realized by compressing the at least one upstream bead (50,55) with a surface of the insert component (80).

4. The flat gasket according to claim 2 with a component to be sealed having at least two parts, wherein a insert component (80) has a variable or constant protrusion or recession or a combination thereof relative to the respective sealing surface of one part of the two-part component 60,65).

5. The flat gasket according to any previous claim, wherein the upstream beads are full beads.

6. The flat gasket according to any of claims 1 to 4, wherein the upstream beads are half beads.

7. The flat gasket according to any previous claim with a component to be sealed having at least two parts, wherein at least one of the parts of the two-part component (60,65) includes a channel (75) that ends in an area of the sealing surface of the respective component, wherein the area in which the channel ends corresponds to an area of the flat gasket (1) between the sealing area of the upstream bead (50,55) and the sealing area of the stopper (30).

## Revendications

1. Joint d'étanchéité plat (1) avec au moins une couche nervurée (10, 20) et une ou plusieurs couches à fonction d'arrêt (30, 35), le joint d'étanchéité plat (1) présentant autour d'une ouverture d'étanchéité au moins un arrêt (30) circulaire dans la couche à fonction d'arrêt et au moins une première nervure (50, 55) circulaire placée en avant en référence à la fonction d'étanchéité étant disposée sur un côté de l'arrêt situé en direction de l'ouverture d'étanchéité dans au moins une couche nervurée et sur lequel est disposée au moins une deuxième nervure (40, 45) circulaire placée en arrière du côté de l'arrêt opposé à l'ouverture d'étanchéité **caractérisé en ce que** la couche à fonction d'arrêt se termine avant la première nervure en direction de l'ouverture d'étanchéité.

2. Joint d'étanchéité plat selon la revendication 1 le joint d'étanchéité plat (1) étant un joint d'étanchéité plat multicouches, de préférence un joint d'étanchéité plat en acier à plusieurs couches.

3. Joint d'étanchéité plat selon une quelconque des revendications précédentes avec un composant (60, 65) à étanchéifier au moins en deux parties, une au moins des nervures (50, 55) placées en avant servant à étanchéifier vis-à-vis d'au moins un composant encastré (80) prévu dans au moins une surface d'étanchéité du composant (60, 65) à étanchéifier au moins en deux parties et la fonction d'étanchéification de la nervure (50, 55) placée en avant étant obtenue par compression de la nervure (50, 55) placée en avant avec une surface du composant encastré (80).

4. Joint d'étanchéité plat selon la revendication 2 avec un composant (60, 65) à étanchéifier au moins en deux parties, un composant encastré (80) présentant une partie en saillie ou une partie inférieure variable ou constante ou une combinaison de celles-ci concernant la surface d'étanchéification respective d'un composant du composant (60, 65) en deux parties.

5. Joint d'étanchéité plat selon une quelconque des revendications précédentes pour lequel les nervures placées en avant sont des nervures pleines.

6. Joint d'étanchéité plat selon les revendications 1 à 4 pour lequel les nervures placées en avant sont des demi-nervures.

7. Joint d'étanchéité plat selon une quelconque des revendications précédentes avec un composant (60, 65) à étanchéifier au moins en deux parties pour lequel au moins un des composants d'un composant (60, 65) en deux parties présente un conduit (75) qui se termine dans une zone de la surface d'étanchéification du composant respectif, la zone dans laquelle se termine le conduit correspondant avec une zone en rapport avec le joint d'étanchéification plat (1) entre la zone d'étanchéification de la nervure (50, 55) placée en avant et la zone d'étanchéification de l'arrêt (30).
